# EUROPEAN PATENT SPECIFICATION

(11) **EP 2 638 799 B1**
(45) Date of publication and mention of the grant of the patent: **28.01.2015**
(21) Application number: 13158651.3
(22) Date of filing: 11.03.2013
(51) Int. Cl.: A01K 31/04

(54) **Machine for cleaning barns for farming birds**
Maschine zum Reinigen von Lagern für die Aufzucht von Geflügel
Machine pour le nettoyage des hangars pour l'élevage d'oiseaux

(30) Priority: 12.03.2012 IT BO20120125
(43) Date of publication of application: 18.09.2013
(73) Proprietor: Poddi, Roberto, 44100 Ferrara (IT); Chiari, Andrea, 46035 Ostiglia (Mantova) (IT)
(72) Inventor: Poddi, Roberto, 44100 Ferrara (IT); Chiari, Andrea, 46035 Ostiglia (Mantova) (IT)
(74) Representative: Fuochi, Riccardo

(56) References cited:
- EP-A1- 0 400 304
- EP-A1- 0 965 266
- AU-A- 5 706 773
- FR-A1- 2 852 198
- GB-A- 454 784

## Description

### TECHNICAL FIELD OF THE INVENTION

The present invention relates to a machine for cleaning barns for farming birds.

More in detail, the present invention relates to a machine for cleaning barns for farming birds such as laying hens, guinea hens, pheasants, ducks and the like.

### PRIOR ART

Document AU-A-5706773 discloses a known machine for cleaning poultry barns. Document EP-A1-0965266 discloses a common poultry barn with foldable appendages.

In the field of farming of birds of various species, such as for example laying hens but also other ones, the traditional cages present in the farming barns are currently replaced, or will soon be, according to precise obligations required by the specific laws, with enriched cages or aviaries.

This leads to the need, during the farming cycle - lasting for example thirteen months - to collect the eggs laid by the free hens in the barn and to remove the excrement, or litter, produced by the same hens.

In particular, collecting the eggs and removing the litter should take place both on the floor beneath the rows of cages, and in the central and side corridors of the barn.

Moreover, the litter should be also removed from the coverings of the egg channels.

Then, at the end of the farming cycle, there is the need to gather and capture the hens, which are free in the barn, to load them on the transport means and transfer them to another destination.

The above operations are certainly difficult and burdensome, especially if we consider the fact that the corridor of the central barn is usually large only 90-120 cm, while beneath the lower rows of the cages there is a space which is 2 m deep and only 35 cm high, wherein the cleaning and gathering operations must be equally carried out.

Then, it should be noted that with the farming system with enriched cages and/or aviaries, it is possible to farm up to eighteen hens by square metre, which are totally free inside the barn: this clearly makes the above operations very difficult, especially to maintain the necessary hygiene conditions.

To this end, it happens that the operations for cleaning and disinfecting the barns are only carried out at the end of the farming cycle, which lasts about thirteen months, with worsening of the sanitary conditions and deterioration of the wellbeing of the same animals. In fact, it is very difficult to intervene with operators that manually remove the litter, provided with wheelbarrows and shovels, during the farming cycle.

Another problem results from the fact that the litter layer that accumulates on the floor of the barn, once the few thickness centimetres have been reached, constitutes an ideal place for laying the eggs, which the hens often prefer over the same nests.

This fact causes two serious consequences from the economic point of view.

The first consequence is that the eggs laid on the litter accumulated on the floor cannot be collected by the automated system the cages and aviaries are provided with.

The second consequence is that, even if a prompt and also very expensive manual collection of the eggs laid on the layer of litter is carried out, those among these that are not broken, pecked or eaten by the hens, on the average are quite dirty and are therefore considered as second category: as a consequence, they are paid much less than the clean ones collected by the cost-effective automated system installed in the barn.

### OBJECTS OF INVENTION

The technical task of the present invention is to improve the prior art.

Within the scope of this technical task, it is an object of the present invention to provide a machine for cleaning barns for farming birds which allows all the floor of the farming barn to be effectively cleaned also in the presence of free birds.

Yet another object of the present invention is to provide a machine for cleaning barns for farming birds which allows the free birds in the barn to be gathered and captured at the end of the farming cycle.

Such task and such objects are all achieved by the machine for cleaning barns for farming birds according to the annexed claim 1.

Advantageous features and preferred embodiments are described in the dependent claims.

### BRIEF DESCRIPTION OF THE DRAWINGS

These and further advantages shall be better understood by any man skilled in the art from the following description and annexed drawings, provided by way of a non limiting example, wherein:
figure 1 shows an axonometric view of the machine according to the present invention;

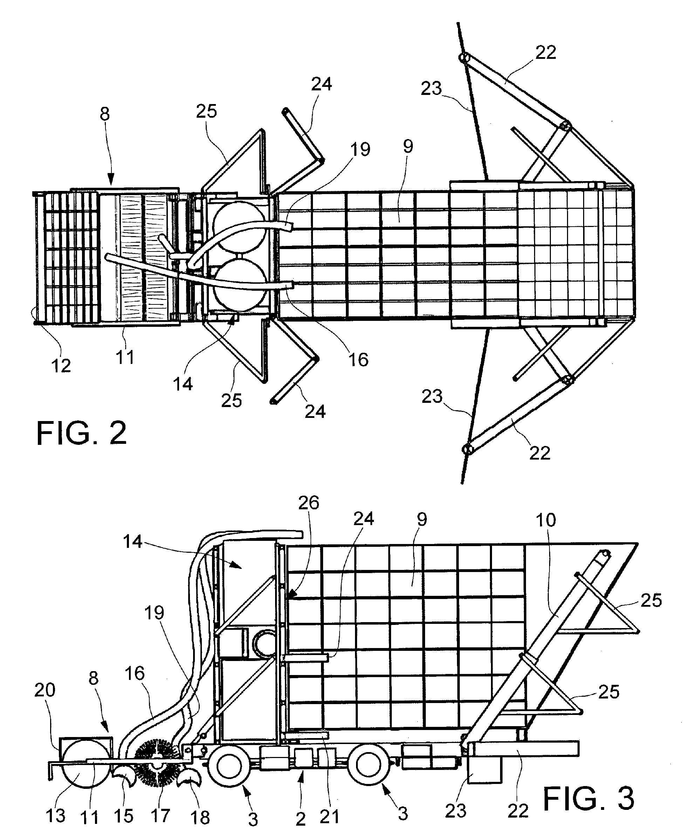

figure 2 shows a plan view of the machine;
figure 3 shows a side view of the machine;
figure 4 shows an axonometric view of the machine in standby configuration, with front appendage closed and side appendages retracted.

### EMBODIMENTS OF THE INVENTION

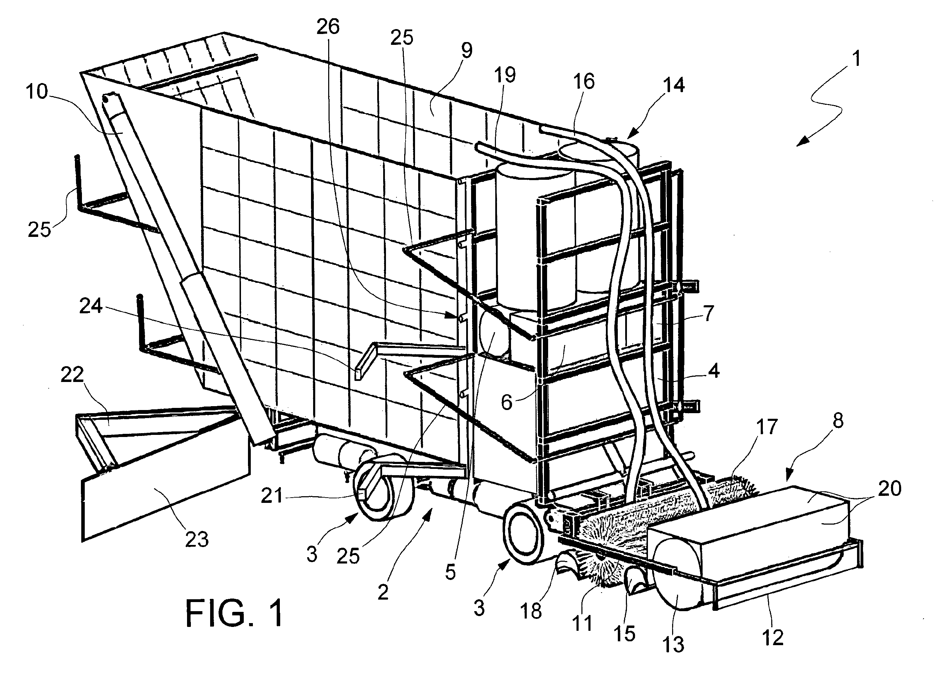

With reference to figure 1, a machine for cleaning barns for farming birds according to the present invention is globally indicated with 1.

The machine according to the invention may be effectively used for cleaning barns for farming birds, in particular laying hens, as shall appear from the description of the technical advantages offered, without any limitation.

The machine may of course also be used for cleaning barns for farming birds of other species, such as for example guinea hens, pheasants, ducks and others.

The cleaning machine according to the present invention is particularly but non exclusively suitable for operating inside barns, with enriched cages and/or aviaries, comprising central, side corridors and floors beneath the cage rows.

The machine according to the invention comprises a frame 2.

Frame 2 may consist, for example, of a support platform on which all the various machine components are mounted, as described hereinafter.

Frame 2 may in any case take any other shape suitable for the application.

The machine further comprises locomotion means of frame 2, globally indicated with reference numeral 3.

The locomotion means 3 allow the machine 1 to be moved mainly along the corridors of the farming barn, but optionally also through other areas of the same.

In detail, the locomotion means 3 comprise for example four wheels rotatably supported into frame 2, a motor and means for transmitting the motion from the motor to the wheels, which preferably but non exclusively are all driving and steering.

The wheels - for example only some or also all of them - may be of the type pivoting around vertical axes.

The motor of the locomotion means 3 is of the per se known type and may be of the electric or endothermic type.

If the motor is electric, it may be powered by a cable tray or electric cable, or as an alternative, by batteries on board of the machine.

In an alternative embodiment of the machine according to the invention, the locomotion means 3 may consist of four hydraulic motors associated to the four wheels, respectively.

The machine comprises direct or remote guide means for carrying out its operations.

In other words, a guide station may be provided on the machine for an operator that directly manages the functions of the same machine, or the machine may be remotely guided, for example by radio transmission means or the like.

Of course, the guide means are operatively connected to the locomotion means 3 and to all the other actuators present on the machine, as it is better explained hereinafter.

A diesel or electric power generation unit 4 is attached to frame 2 for the various utilities present on machine 1, normally but not necessarily coinciding with the motor of the locomotion means 3.

Moreover, a hydraulic power generation unit 5 is attached to frame 2 for the various utilities present on the machine.

A hydraulic tank 6 and a radiator 7 are also provided. According to an aspect of the present invention, machine 1 comprises means for removing the excrement of the hens from the barn floor, globally indicated with reference numeral 8.

According to another aspect of the present invention, machine 1 comprises at least one crate 9 for collecting the excrement removed from the floor by the removing means 8, or alternatively a reservoir provided with emptying screw.

Crate 9 is attached to frame 2 preferably at the back thereof.

Crate 9 is of the tilting type, by means of respective actuation means, for example hydraulic pistons 10. This allows the excrement collected to be unloaded into special areas, for example a manure pit.

Crate 9 may be made of plastic, or metal, or fibreglass, without any limitation.

Frame 2 of machine 1 comprises a front appendage 11.

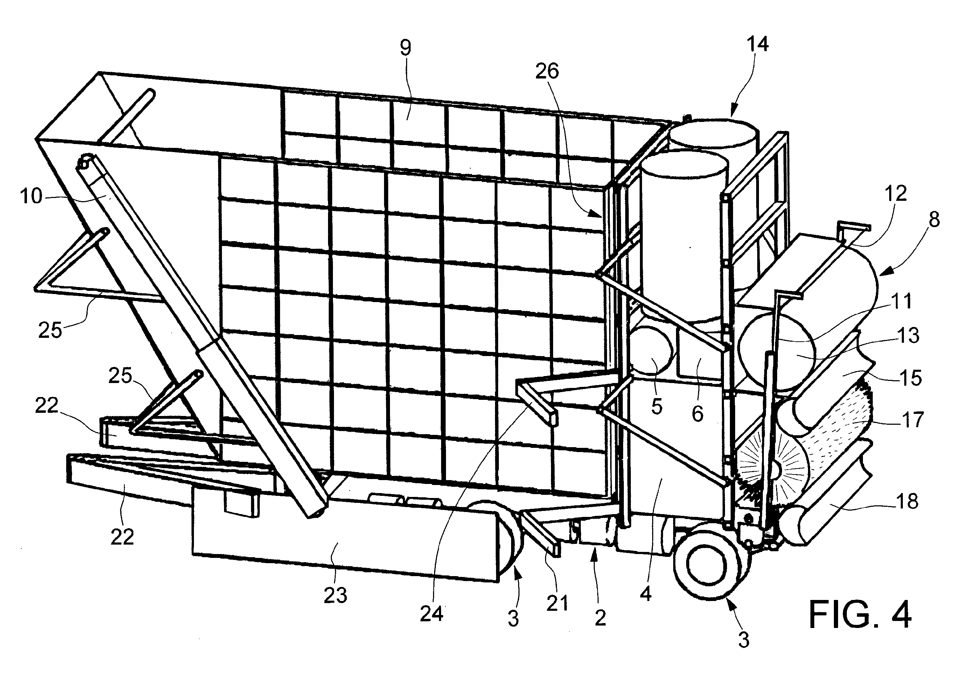

The front appendage 11 may be lifted or retracted by means of respective hydraulic actuation means, for reaching the minimum overall dimensions configuration shown in figure 4.

The means for removing excrement 8 are installed on the front appendage 11 of frame 2.

The front appendage 11 is for example shaped as a rectangular frame parallel to the floor.

The means for removing excrement 8 comprise at least one cable 12 scraping on the barn floor.

Cable 12 has the respective ends attached to the front appendage 11, for removing and detaching the excrement. The means for removing excrement 8 further comprise at least one cutter 13.

Cutter 13 is rotatably supported with the ends thereof, in the front appendage 11.

Cutter 13 is provided with respective actuation means adapted to follow the profile of the floor and break up any compacted excrement.

The actuation means of cutter 13 may be electric, mechanical, hydraulic or other type, in relation to the specific application requirements, and are connected to the diesel or electric power generation unit 4 or to the hydraulic power generation unit 5.

The means for removing excrement 8 comprise suction means, globally indicated with reference numeral 14.

The suction means 14 are attached to frame 2, for example on top of the hydraulic power generation unit 5.

The suction means 14 comprise a first suction mouth 15, positioned near cutter 13.

More in detail, the first suction mouth 15 is positioned behind cutter 13.

The first suction mouth 15 is connected to a first suction conduit 16 which allows the discharge of the excrement into crate 9.

In particular, the first suction mouth 15 draws the excrement detached by cable 12 and by cutter 13.

The means for removing excrement 8 further comprise a sweeper 17 having a horizontal axis.

Sweeper 17 is rotatably supported in the front appendage 11 of frame 2.

Sweeper 17 is positioned at the back of the first suction mouth 15.

Sweeper 17 is provided with respective actuation means which may be electric, mechanical, hydraulic or other type, in relation to the specific application requirements, and are connected to the diesel or electric power generation unit 4 or to the hydraulic power generation unit 5.

Sweeper 17 removes any excrement stuck to the floor even after the passage of the first suction mouth 15.

To ensure a better cleaning, the suction means 14 comprise a second suction mouth 18, positioned near sweeper 17.

More in detail, the second suction mouth 18 is positioned behind sweeper 17.

The second suction mouth 18 is connected to a respective second suction conduit 19 which allows for the discharge of the excrement into crate 9.

In particular, the second suction mouth 19 draws the excrement moved by sweeper 17.

Therefore, in the practice, the means for removing excrement 8 operate in a cascade, with two suction steps, where the second step collects the particles that the first step was not able to collect and those moved by sweeper 17.

The suction means 14 may also be used for drawing any water excess still on the floor after washing cages and floor.

According to an important aspect of the present invention, the front appendage 11 of frame 2 comprises a front mirror 20 for the birds, for example chickens. The front mirror 20 is preferably positioned in vertical position, in front of the front appendage 11; a portion of the mirror may also be horizontally positioned.

When it is necessary to gather and capture the birds present in the barn, the front mirror 20 allows them to be pushed in the desired area without scaring them, since they feel they are being pushed by other birds.

In an embodiment of machine 1 according to the invention, not shown in the figures, the means for removing excrement 8 comprise at least one screw or conveyor belt system, to integrate the suction means 14, which helps in transporting the excrement into crate 9.

According to yet another aspect of the present invention, machine 1 comprises side arms 21 for cleaning the egg channels, upon the passage of the machine along the barn corridors.

The side arms 21 may be retractable or fixed, provided with scrapers or brushes for cleaning the egg channels. The side arms 21 are associated with respective actuation means, for example hydraulic or electric, or controlled by a chain.

According to a further aspect of the present invention, machine 1 comprises retractable side elements 22 adapted to slot beneath the cages to remove the excrement and collect it in the transit corridors of the machine.

The side elements 22 are provided with a snap-wise return system actuated by the contact of a special sensor with the cage feet.

Figure 4 shows the side elements 22 in the standby configuration, i.e. minimum overall dimensions.

The side elements 22 may also be articulated.

The side elements 22 are associated with respective actuation means, for example hydraulic or electric.

The retractable side elements 22 may comprise respective side mirrors 23 for the birds, having the same effect already described of the front mirror 20 during the step of gathering and capturing the birds, for example chickens.

According to another aspect of the present invention, machine 1 comprises retractable side appendages 24 suitable for entering into the cages or aviaries to force the birds out of the nests.

The side appendages 24 may also be articulated.

The side appendages 24 are associated with respective actuation means, for example hydraulic or electric. Machine 1 comprises lifting means 25 for appendages projecting from the cages, for example the perches, for transiting into the corridors.

More in detail, the lifting means 25 comprise frames that are vertically movable by means of respective actuation means, for example hydraulic, upon the passage of the machine in areas where perches are provided.

In the present embodiment of the machine, the lifting means 25 are positioned on both frame 2 and on crate 9. Of course, the shape and arrangement of the lifting means 25 may be any other in relation to the specific application requirements.

The machine according to the invention comprises means for dispensing detergent and/or disinfectant substances on the floor and/or on the walls and/or on the cages, globally indicated with reference numeral 26.

More in particular, the dispensing means 26 allow water, also mixed with soaps, at a high pressure and optionally warmed on board of the machine, to be dispensed on the floor and/or on the walls and/or on the cages.

The dispensing means 26 also comprise specific means for nebulising disinfectants on the floor and/or on the walls and/or on the cages.

The dispensing means 26 are of course positioned beneath and on the sides of machine 1, for example near crate 9.

Moreover, means for the fire-disinfection of all the barn areas may be provided.

Machine 1 also comprises suitably positioned proximity and strain sensors, which along with data location and transmission means allow the remote or local guide of the machine.

The operation of the machine according to the invention in the light of what described is totally intuitive. Machine 1 is guided, either directly by an operator or remotely guided, through the central and side corridors of the barn to remove all the accumulated excrement from the floor.

More in particular, machine 1 according to the invention can, with a single passage along the corridors of the breeding farm, collect the excrement by means of the removing means 8 and carry out a subsequent deep washing and disinfection of the floors by means of the removing means 26.

If beneath the cages of the barn there is an accessible space for the birds, for example chickens, in a first step machine 1 can remove the excrement present along the corridor and thanks to the retractable side elements 22 it can extract the excrement present beneath the cages, accumulating it into the transit corridor, in a second step it can collect the excrement accumulated before along the corridor and perform washing and disinfection.

Moreover, at the suitable time, the machine can carry out all the functions already described, for example fire-disinfection and others.

The invention thus conceived allows important technical advantages to be obtained.

The machine according to the invention allows any manual intervention of the operators for removing the excrement to be eliminated since it is autonomously able to effectively carry out such removal in all the barn areas, including the side floors beneath the cages that would not normally be accessible by the operators. The machine then allows all the areas from which the excrement has been removed to be quickly and effectively washed.

In addition to a better cleaning of the entire place, this also allows a higher quality of the eggs laid to be obtained, as they remain clean.

It has thus been seen that the invention achieves the intended objects.

The present invention has been described according to preferred embodiments but equivalent versions may be conceived without departing from the scope of protection offered by the following claims.

## Claims

1. Machine for cleaning barns for farming birds comprising, a frame (2), locomotion means (3) with steering wheels, means for removing chicken excrement (8) from the floor of the barn and **characterised in that** it comprises means (25) for lifting the projecting appendages of the cages, so as to be able to transit in the narrow spaces present in bird-farming barns.

2. Machine according to claim 1, comprising at least one crate (9) for collecting the excrement removed from the floor by said removing means (8).

3. Machine according to one of the previous claims, wherein said frame (2) comprises a front appendage (11) on which said means for removing excrement (8) are installed.

4. Machine according to the previous claim, wherein said means for removing excrement (8) comprise at least one cable (12) scraping on the floor of the barn, with the ends fixed to said front appendage (11), to remove and detach the excrement.

5. Machine according to one of claims 3 or 4, wherein said means for removing excrement (8) comprise at least one cutter (13), rotatably supported in said front appendage (11) and provided with respective actuation means, suitable for following the profile of the floor and for breaking up the possibly compacted excrement.

6. Machine according to the previous claim, wherein said means for removing excrement (8) comprise suction means (14) equipped with a first suction mouth (15) positioned near to said cutter (13).

7. Machine according to the previous claim, wherein said means for removing excrement (8) comprise a sweeper (17) having a horizontal axis, rotatably supported in said front appendage (11) and provided with respective actuation means, which removes the excrement possible still stuck to the floor.

8. Machine according to the previous claim, wherein said suction means (14) comprise a second suction mouth (18) positioned near to said sweeper (17).

9. Machine according to one of the previous claims, comprising retractable side arms (21) for cleaning the egg channels.

10. Machine according to one of the previous claims, comprising retractable side elements (22) suitable for slotting beneath the cages to remove the excrement and collect it in the central transit corridor of the machine.

11. Machine according to one of the previous claims, comprising retractable side appendages (24) suitable for entering into the cages or aviaries to force the chickens out of the nests.

12. Machine according to one of claims 3 to 11, wherein said front appendage (11) of said frame comprises a front mirror (20) to move the chickens.

13. Machine according to one of claims 10 to 12, wherein said retractable side elements (22) comprise respective side mirrors (23) to move the chickens.

14. Machine according to one of the previous claims, comprising direct or remote guide means.

15. Machine according to one of the previous claims, comprising means (26) for dispensing detergent and/or disinfectant substances on the floor and/or on the walls and/or on the cages.

## Patentansprüche

1. Maschine zum Reinigen von Ställen für Zuchtgeflügel, die einen Rahmen (2), Fortbewegungsmittel (3) mit Lenkrädern und Mittel zum Entfernen von Hühnerexkrementen (8) vom Boden des Stalls umfasst und die **dadurch gekennzeichnet ist, dass** sie Mittel (25) zum Anheben der vorstehenden Ansätze der Käfige umfasst, so dass sie imstande ist, die engen Räume zu durchqueren, die in Geflügelzuchtställen vorhanden sind.

2. Maschine nach Anspruch 1, die mindestens eine Kiste (9) zum Sammeln der von den Entfernungsmitteln (8) vom Boden entfernten Exkrementen umfasst.

3. Maschine nach einem der vorhergehenden Ansprüche, wobei der Rahmen (2) einen vorderen Ansatz (11) umfasst, auf den die Mittel (8) zum Entfernen von Exkrementen installiert sind.

4. Maschine nach dem vorhergehenden Anspruch, wobei die Mittel (8) zum Entfernen von Exkrementen mindestens ein Seil (12) umfassen, das auf dem Boden des Stalls schabt, wobei die Enden an dem vorderen Ansatz (11) befestigt sind, um die Exkremente zu entfernen und zu lösen.

5. Maschine nach einem der Ansprüche 3 oder 4, wobei die Mittel (8) zum Entfernen von Exkrementen mindestens einen drehbar in dem vorderen Ansatz (11) gelagerten und mit entsprechenden Betätigungsmitteln versehenen Fräser (13) umfassen, der imstande ist, der Kontur des Bodens zu folgen und die möglicherweise verdichteten Exkremente zu zerbrechen.

6. Maschine nach dem vorhergehenden Anspruch, wobei die Mittel (8) zum Entfernen von Exkrementen Saugmittel (14) umfassen, die mit einem ersten Saugstutzen (15) versehen sind, der nahe dem Fräser (13) angeordnet ist.

7. Maschine nach dem vorhergehenden Anspruch, wobei die Mittel (8) zum Entfernen von Exkrementen einen drehbar in dem vorderen Ansatz (11) gelagerten und mit entsprechenden Betätigungsmitteln versehenen Kehrer (17) mit einer horizontalen Achse umfassen, der die möglicherweise noch am Boden haftenden Exkremente entfernt.

8. Maschine nach dem vorhergehenden Anspruch, wobei die Saugmittel (14) einen zweiten Saugstutzen (18) umfassen, der nahe dem Kehrer (17) angeordnet ist.

9. Maschine nach einem der vorhergehenden Ansprüche, die ausfahrbare Seitenarme (21) zum Reinigen der Eierkanäle umfasst.

10. Maschine nach einem der vorhergehenden Ansprüche, die ausfahrbare Seitenelemente (22) umfasst, die sich unter die Käfige einfügen können, um die Exkremente zu entfernen und im mittleren Durchgangskorridor der Maschine zu sammeln.

11. Maschine nach einem der vorhergehenden Ansprüche, die ausfahrbare seitliche Ansätze (24) umfasst, die in die Käfige oder Volieren eintreten können, um die Hühner zum Verlassen der Nester zu veranlassen.

12. Maschine nach einem der Ansprüche von 3 bis 11, wobei der vordere Ansatz (11) des Rahmens einen vorderen Spiegel (20) zum Bewegen der Hühner umfasst.

13. Maschine nach einem der Ansprüche von 10 bis 12, wobei die ausfahrbaren Seitenelemente (22) jeweilige seitliche Spiegel (23) zum Bewegen der Hühner umfassen.

14. Maschine nach einem der vorhergehenden Ansprüche, die direkte oder entfernt angeordnete Steuerungsmittel umfasst.

15. Maschine nach einem der vorhergehenden Ansprüche, die Mittel (26) zum Ausgeben von Reinigungs- und/oder Desinfektionssubstanzen auf den Boden und/oder die Wände und/oder die Käfige umfasst.

## Revendications

1. Machine pour le nettoyage de granges pour l'élevage de volatiles, comprenant un châssis (2), des moyens de locomotion (3) avec des roues directrices, des moyens pour enlever des excréments de poules (8) du sol de la grange et **caractérisée en ce qu'**elle comprend des moyens (25) pour soulever les prolongements en saillie des cages, de manière à être en mesure de transiter dans les espaces étroits présents dans des granges d'élevage de volatiles.

2. Machine selon la revendication 1, comprenant au moins une caisse (9) pour recueillir les excréments enlevés du sol par lesdits moyens d'enlèvement (8).

3. Machine selon une des revendications précédentes, dans laquelle ledit châssis (2) comprend un prolongement frontal (11) sur lequel lesdits moyens pour l'enlèvement des excréments (8) sont installés.

4. Machine selon la revendication précédente, dans laquelle lesdits moyens pour l'enlèvement des excréments (8) comprennent au moins un câble (12) raclant sur le sol de la grange, avec les extrémités fixées audit prolongement frontal (11), pour enlever et détacher les excréments.

5. Machine selon une des revendications 3 ou 4, dans laquelle lesdits moyens pour l'enlèvement des excréments (8) comprennent au moins un coupeur (13), monté de manière rotative dans ledit prolongement frontal (11) et muni de moyens d'actionnement respectifs, adapté pour suivre le profil du sol et pour rompre les excréments éventuellement compactés.

6. Machine selon la revendication précédente, dans laquelle lesdits moyens pour l'enlèvement des excréments (8) comprennent des moyens d'aspiration (14) équipés d'une première embouchure d'aspiration (15) positionnée près dudit coupeur (13).

7. Machine selon la revendication précédente, dans laquelle lesdits moyens pour l'enlèvement des excréments (8) comprennent une balayeuse (17) ayant un axe horizontal, supportée de manière rotative dans ledit prolongement frontal (11) et munie de moyens d'actionnement respectifs, qui enlève les excréments éventuellement encore collés au sol.

8. Machine selon la revendication précédente, dans laquelle lesdits moyens d'aspiration (14) comprennent une deuxième embouchure d'aspiration (18) positionnée près de ladite balayeuse (17).

9. Machine selon une des revendications précédentes, comprenant des bras latéraux rétractables (21) pour nettoyer les canaux des oeufs.

10. Machine selon une des revendications précédentes, comprenant des éléments latéraux rétractables (22) adaptés pour s'insérer sous les cages pour enlever les excréments et les rassembler dans le couloir de transit central de la machine.

11. Machine selon une des revendications précédentes, comprenant des prolongements latéraux rétractables (24) adaptés pour pénétrer dans les cages ou volières pour forcer les poules à sortir des nids.

12. Machine selon une des revendications 3 à 11, dans laquelle ledit prolongement frontal (11) dudit châssis comprend un miroir frontal (20) pour faire bouger les poules.

13. Machine selon une des revendications 10 à 12, dans laquelle lesdits éléments latéraux rétractables (22) comprennent des miroirs latéraux respectifs (23) pour faire bouger les poules.

14. Machine selon une des revendications précédentes, comprenant des moyens de guidage direct ou à distance.

15. Machine selon une des revendications précédentes, comprenant des moyens (26) pour distribuer des substances détergentes et/ou désinfectantes sur le sol et/ou sur les parois et/ou sur les cages.
